# EUROPEAN PATENT APPLICATION

(11) **EP 4 629 079 A1**
(43) Date of publication of application: **08.10.2025**
(21) Application number: 24795591.7
(22) Date of filing: 04.03.2024
(51) Int. Cl.: G06F 9/50

(54) **RESOURCE SCHEDULING METHOD, NODE, DEVICE, MEDIUM, AND PROGRAM PRODUCT**

(30) Priority: 28.04.2023 CN 202310488044
(71) Applicant: Tencent Technology (Shenzhen) Company Limited, Shenzhen, Guangdong 518057 (CN)
(72) Inventor: ZHOU, Liangyu, Shenzhen, Guangdong 518057 (CN); CHEN, Kaiyue, Shenzhen, Guangdong 518057 (CN)
(74) Representative: Nederlandsch Octrooibureau
(86) International application number: PCT/CN2024/079856
(87) International publication number: WO 2024/222204

(57) **Abstract**

This application discloses a resource allocating method, a node, a device, a medium, and a program product. A configurable resource of a virtual node is determined based on an idle resource of at least one computing node. The method includes: receiving a first computing task from an allocating node, the first computing task including resource quantity information; performing format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information; and transmitting the second computing task to the allocating node, the second computing task being configured to indicate the allocating node to execute the second computing task based on the target computing node.

## Description

### RELATED APPLICATION

This application claims priority to Chinese Patent Application No. 202310488044.2, entitled "RESOURCE ALLOCATING METHOD, NODE, DEVICE, MEDIUM, AND PROGRAM PRODUCT" filed on April 28, 2023, which is incorporated herein by reference in its entirety.

### FIELD OF THE TECHNOLOGY

This application relates to the field of computer technologies, and in particular, to a resource allocating method, a node, a device, a medium, and a program product.

### BACKGROUND OF THE DISCLOSURE

A container cluster management system (Kubernetes, K8s) is a container-based cluster management platform. A plurality of computing nodes are deployed in a cluster managed by K8s. Because there are always some idle resources caused by resource fragmentation and low load in the computing nodes, how to reuse these idle resources becomes a problem to be urgently resolved.

Because a control node Operator is needed to start a computing task for most services, in the related art, when the idle resources are reused, native code of the control node needs to be modified to convert a data format of native resources in a computing task for a service into a data format of the idle resources. Consequently, a strong intrusion is caused to code.

### SUMMARY

Based on the foregoing defects or disadvantages in the related art, it is expected to provide a resource allocating method, a node, a device, a medium, and a program product, to avoid intrusive modification to native code of a control node.

According to a first aspect, this application provides a resource allocating method. The resource allocating method is applied to a virtual node of which a configurable resource is determined based on an idle resource of at least one computing node, and the method includes: receiving a first computing task from an allocating node, the first computing task including resource quantity information indicating a computing resource quantity pre-determined for executing the first computing task; performing format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information; and transmitting the second computing task to the allocating node, the second computing task being configured to indicate the allocating node to execute the second computing task based on the target computing node.

According to a second aspect, this application provides another resource allocating method. The resource allocating method is applied to an allocating node, and the method includes: transmitting a first computing task to a virtual node, the first computing task comprising resource quantity information indicating a computing resource quantity pre-determined for executing the first computing task, the first computing task being configured to indicate the virtual node to perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information; receiving the second computing task from the virtual node; and executing the second computing task based on the target computing node.

According to a third aspect, this application provides a virtual node, a configurable resource of the virtual node is determined based on an idle resource of at least one computing node, and the virtual node includes:
a receiving module, configured to receive a first computing task from an allocating node, the first computing task including resource quantity information indicating a computing resource quantity pre-determined for executing the first computing task;
a format conversion module, configured to perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information; and
a transmitting module, configured to transmit the second computing task to the allocating node, the second computing task being configured to indicate the allocating node to execute the second computing task based on the target computing node.

According to a fourth aspect, this application provides an allocating node, and the allocating node includes:
a transmitting module, configured to transmit a first computing task to a virtual node, the first computing task including resource quantity information indicating a computing resource quantity pre-determined for executing the first computing task, the first computing task being configured to indicate the virtual node to perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information;
a receiving module, configured to receive the second computing task from the virtual node; and
an allocating module, configured to execute the second computing task based on the target computing node.

According to a fifth aspect, an embodiment of this application provides a computer device, including a memory, a processor, and a computer program stored in the memory and executable on the processor, the processor implementing the method according to the embodiments of this application when executing the program.

According to a sixth aspect, an embodiment of this application provides a computer-readable storage medium, having a computer program stored therein, and the program, when executed by a processor, implementing the method described in the embodiments of this application.

According to a seventh aspect, an embodiment of this application provides a computer program product, the computer program product includes instructions, and when the instructions are run, the method described in the embodiments of this application is caused to be performed.

A resource allocating method, a node, a device, a medium, and a program product provided in this application may be applied to a virtual node. A configurable resource in the virtual node is determined based on idle resources of at least one computing node, so that the idle resources of the at least one computing node are aggregated, and the configurable resource of one virtual node can represent all idle computing power of the computing nodes. After it is determined that there is the configurable resource in the virtual node, a computing task, for example, a first computing task, can be received based on the configurable resource. After receiving the first computing task, because the first computing task includes resource quantity information indicating a computing resource quantity pre-determined for executing the first computing task, the virtual node may determine, based on the configurable resource, whether there is a target computing node satisfying the resource quantity information in the at least one computing node. If there is the target computing node satisfying the resource quantity information, because a data format of the idle resource is different from a data format of the resource quantity information in the first computing task, considering that if the idle resource in the computing node needs to be used, format conversion needs to be performed on the data format of the resource quantity information. Specifically, format conversion is performed on the resource quantity information in the first computing task based on a field format of the idle resource, to obtain a second computing task. Therefore, in this application, when it is determined that there is the target computing node satisfying the resource quantity information in the at least one computing node, there is no need to use a control node to perform format conversion on the resource quantity information in the computing task, and the virtual node is used to implement format conversion, so that intrusive modification to native code of the control node is avoided. Then, a generated second computing task is transmitted to an allocating node, to indicate the allocating node to execute the second computing task based on the target computing node, so that the idle resource is reused on the premise of non-intrusive modification to the native code, and a utilization rate of a cluster resource is improved at low costs.

Additional aspects and advantages of this application are described as follows, and some are apparent from the following descriptions, or may be learned by practice of this application.

### BRIEF DESCRIPTION OF THE DRAWINGS

Other features, objectives, and advantages of this application are clear from the following detailed descriptions of non-restrictive embodiments with reference to the following accompanying drawings.
FIG. 1 is a schematic diagram of a structure of a resource allocating system according to an embodiment of this application.
FIG. 2 is a schematic flowchart of a resource allocating method according to an embodiment of this application.
FIG. 3 is a schematic diagram of a structure of a virtual node according to an embodiment of this application.
FIG. 4 is a schematic diagram of distribution of a total resource of a computing node according to an embodiment of this application.
FIG. 5 is a schematic diagram of an effect of a deployment scenario of a virtual node according to an embodiment of this application.
FIG. 6 is a schematic flowchart of another resource allocating method according to an embodiment of this application.
FIG. 7 is a schematic flowchart of still another resource allocating method according to an embodiment of this application.
FIG. 8 is a schematic diagram of a structure of a virtual node according to an embodiment of this application.
FIG. 9 is a schematic diagram of a structure of an allocating node according to an embodiment of this application.
FIG. 10 is a schematic diagram of a structure of a computer device according to an embodiment of this application.

### DESCRIPTION OF EMBODIMENTS

This application is further described in detail below with reference to the accompanying drawings and embodiments. The specific embodiments described herein are merely configured for explaining the related disclosure, but are not intended to limit the present disclosure. In addition, for ease of description, the accompanying drawings only show parts related to the present disclosure.

In a case of no conflict, the embodiments of this application and features of the embodiments may be combined with each other. This application is described in detail below with reference to the accompanying drawings and embodiments.

The following describes some concepts in the embodiments of this application.

### 1. Application programming interface server (API server)

The API server provides a resource representational state transfer (HTTP Rest) interface for adding, deleting, modifying, querying, and obtaining various resource objects in Kubernetes, and is a data bus and a data center of an entire system. Functions of the API server are as follows: (1) A Rest application programming interface (API) for cluster management (including authentication and authorization, data verification, and cluster state change) is provided. (2) A hub for data exchange and communication between other modules is provided (the other modules query or modify data through the API server). (3) The API server is an entry for resource quota control. (4) The API server has a complete cluster security mechanism.

### 2. Application program controller

The application program controller (Operator) is a control node in the embodiments of this application, and is configured to extend a Kubernetes API, and create, configure, and manage a complex stateful application, for example, a system such as a database or a cache. The Operator is constructed based on a resource of Kubernetes and a controller, and also includes field knowledge specific to an application program.

### 3. Pod

The Pod is equivalent to a logical host, and each Pod has an IP address thereof. A container in the Pod shares the same IP and port space, and by default, a file system of each container is completely isolated from that of another container. Therefore, a Pod may also be understood as a container group. In addition, the Pod is also equivalent to a logical host. One Pod includes one group of containers, and one Pod does not span a plurality of operating nodes. An objective of the Pod is to provide process isolation for a service. A container to which the service is correspondingly mapped can be run in an independent Pod. A basic container (that is, a Pause container) is run in each Pod, and other containers are service containers. These service containers share a network stack and a volume of the Pause container. The container in one Pod can directly communicate with a Pod container on another host. To establish an association relationship between the service and the Pod, Kubernetes attach a label to each Pod, the service also defines a label selector, and a Pod of a corresponding label is found through the label selector of the service.

### 4. Computing node

The computing node is a container running environment, which is generally a docker environment (an rkt environment similar to the docker environment is also used). In addition, a K8s agent (Kubelet) is run to communicate with a master. The computing node may also run some additional functions, such as log recording and service discovery. The computing node is a truly operating node in a K8s cluster.

Currently, a control node is needed to start a computing task for most services. In the related art, when an idle resource is reused, because a field format of resource quantity information in the computing task is different from a field format used by the idle resource in the computing node, if the idle resource in the computing node needs to be used, the field format of the resource quantity information in the computing task needs to be modified into the field format used by the idle resource. However, when the field format is modified by using the control node, native code of the control node needs to be modified. Consequently, a strong intrusion is caused to code.

Based on this, the embodiments of this application provide a resource allocating method, a node, a device, a medium, and a program product. An allocating node cooperates with a virtual node, to reuse an idle resource of a computing node in a cluster. First, the virtual node obtains an idle resource of at least one computing node, and performs conversion processing on a field format of the idle resource based on a field format of a configurable resource, to obtain the configurable resource of the virtual node. The configurable resource is reported to the allocating node, so that the virtual node is incorporated into the allocating node when the allocating node needs to allocate the computing task subsequently. Then, when the computing task (for example, a first computing task) needs to be allocated, it is determined that the computing task is to be allocated to the virtual node by using the configurable resource. The virtual node determines, based on resource quantity information that is included in the computing task and that is configured for representing a computing resource quantity pre-determined for executing the computing task and the configurable resource, whether there is a target computing node satisfying the resource quantity information in the at least one computing node. If there is the target computing node satisfying the resource quantity information, format conversion is performed on the resource quantity information in the computing task based on the field format of the idle resource, and a converted computing task is transmitted to the allocating node, so that the allocating node can execute a second computing task based on the target computing node.

Solutions provided in the embodiments of this application may be applied to a multi-cluster platform in which a plurality of clusters are deployed online and offline in a mixed manner, or may be applied to a single-cluster platform in which a plurality of clusters are deployed online or offline in an independent manner.

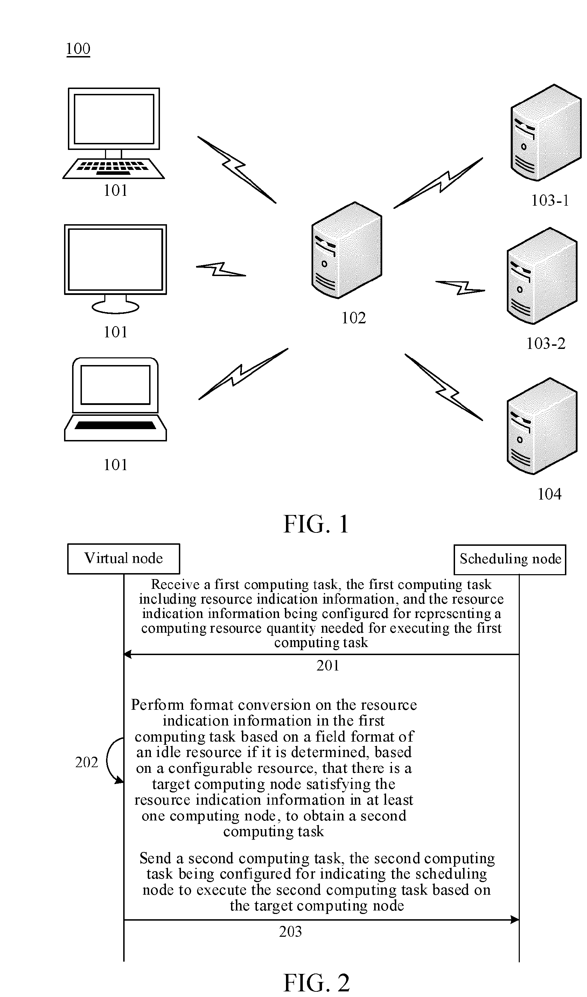

FIG. 1 is a schematic diagram of an application scenario of a resource allocating system according to an embodiment of this application. In the scenario, a terminal device 101, an allocating node 102, a computing node 103, and a virtual node 104 are included. Generally, a quantity of computing nodes 103 is large, referring to a computing node 103-1 to a computing node 103-n shown in FIG. 1. The virtual node 104 and the computing node 103 may be deployed in a same cluster, or may be deployed in different clusters. FIG. 1 shows that the virtual node 104 and the computing node 103 are deployed in a same cluster.

Specifically, a cluster in which the virtual node 104 is deployed is determined based on a cluster in which a service that the virtual node 104 needs to perform is located and an obtained cluster in which the computing node 103 is located.

Generally, in a single-cluster scenario, the virtual node 104 and the computing node 103 are deployed in a same cluster. However, in a multi-cluster scenario in which a plurality of clusters are deployed online and offline in a mixed manner, based on a current calculation amount of an online service and a calculation amount of an offline service, the calculation amount of the offline service is usually greater than the calculation amount of the online service. Therefore, the virtual node 104 is generally deployed in an offline cluster, to count an idle resource of an online cluster that can be accessed by the virtual node 104, and enable the offline service to use the idle resource of the online cluster.

The terminal device 101 may be a smartphone, a tablet computer, a laptop computer, a desktop computer, a smart speaker, a smart watch, or the like, but this is not limited thereto. The terminal device 101 may open a page of the multi-cluster platform or the single-cluster platform corresponding to the allocating node 102, for example, open a corresponding page through a browser or a client. A user may submit a computing task thereof on the page. The computing task may be an online computing task or an offline computing task.

The allocating node 102 may be a management end of the multi-cluster platform or the single-cluster platform, and the computing node 103 is a task execution end of the multi-cluster platform or the single-cluster platform. The allocating node 102, the computing node 103, and the virtual node 104 may be implemented through a server. The server may be an independent physical server, or may be a server cluster or a distributed system including a plurality of physical servers, or may be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform. A terminal may be a smartphone, a tablet computer, a laptop computer, a desktop computer, a smart speaker, a smart watch, or the like, but this is not limited thereto. The terminal and the server may be connected directly or indirectly in a wired or wireless communication manner. This is not limited in this application.

For example, the virtual node 104 counts an idle resource of at least one computing node 103, and performs format conversion on the idle resource, to obtain a configurable resource. The configurable resource is reported to the allocating node 102. Then, when the user submits the computing task (that is, a Pod) to the terminal device 101, the allocating node 102 may determine the corresponding computing node 103 for the computing task according to a load balancing policy. If there is no corresponding computing node 103 that can execute the computing task, and when the configurable resource in the virtual node 104 satisfies a computing resource quantity pre-determined for executing the computing task, the allocating node 102 allocates the computing task to the virtual node 104. When determining, based on resource quantity information and the configurable resource in the computing task, that there is a target computing node satisfying the resource quantity information in the at least one computing node 103, the virtual node 104 performs format conversion on the resource quantity information in the computing task based on a field format of the idle resource, and transmits a converted computing task to the allocating node 102. The allocating node 102 executes a second computing task based on the target computing node.

In a possible application scenario, the cluster platform in the embodiments of this application may generally be a cloud platform. The cloud platform is an architecture platform constructed based on a cloud technology. The cloud technology is a hosting technology that unifies a series of resources such as hardware, software, and a network in a wide area network or a local area network, to implement data computing, storage, processing, and sharing. The cloud technology is a general term for a network technology, an information technology, an integration technology, a management platform technology, and an application technology that are applied based on a cloud computing business model. The cloud technology can form resource pools and be used on demand. This is flexible and convenient. A cloud computing technology is becoming an important support. A background service of a technical network system needs a large quantity of computing and storage resources, such as a video website, an image website, and more portal websites. With the development and application of the Internet industry, in the future, each item may have an identification flag and needs to be transmitted to the background system for logic processing. Data of different levels is processed separately. Various types of industry data need a powerful system support, and this be implemented only through cloud computing.

The technical solutions of this application and how the technical solutions of this application resolve the foregoing technical problem are described in detail below by using the specific embodiments with reference to FIG. 1. The following specific embodiments may be combined with each other, and a same or similar concept or process may not be described in detail in some embodiments again.

As shown in FIG. 2, an embodiment of this application provides a resource allocating method. The method may be applied to the virtual node 104 shown in FIG. 1. A configurable resource of the virtual node is determined based on an idle resource of at least one computing node. The method specifically includes the following operations.

201: Receive a first computing task from an allocating node, the first computing task including resource quantity information indicating a computing resource quantity pre-determined for executing the first computing task. In embodiments of the present application, 201 may include following operations: receive a first computing task from a scheduling node, the first computing task comprising resource indication information, and the resource indication information being configured for representing a computing resource quantity needed for executing the first computing task.

In some embodiments, the idle resource of the computing node includes an unallocated computing resource and an allocated and unused computing resource in the computing node. A computing task submitted through a Kubernetes cluster platform is referred to as a Pod. The unallocated computing resource is a resource without a Pod declaration. The allocated and unused computing resource is an actually unused resource with a Pod declaration.

In this embodiment, the resource quantity information includes, but is not limited to, a central processing unit (CPU) demand amount, a memory (Mem) demand amount, and the like.

In some embodiments, the computing resource quantity pre-determined for executing the first computing task falls within a range of the configurable resource of the virtual node. The configurable resource of the virtual node is a total quantity of idle resources of the at least one computing node. Specifically, the virtual node obtains the idle resource of each of the at least one computing node, and performs summation on the idle resource of each computing node, to obtain the configurable resource of the virtual node.

The first computing task may be an online computing task or an offline computing task, and a corresponding virtual node is configured to receive the online computing task or the offline computing task.

In this embodiment of this application, the online computing task and the offline computing task are both submitted through the cluster platform. Therefore, the online computing task and the offline computing task need to be distinguished from each other. Options of the online computing task and the offline computing task may be provided to a user, so that a corresponding type label is provided to a computing task submitted by the user based on a selection of the user. In other words, when the user selects the offline computing task, a type label corresponding to the offline computing task is added to the computing task submitted by the user. When the user selects the online computing task, a type label corresponding to the online computing task is added to the computing task submitted by the user.

In a possible implementation, because task attributes usually include only the online computing task and the offline computing task, only the offline computing task may be marked, and the task is the online computing task when no type label is added.

Specifically, when the cluster platform is the Kubernetes cluster platform, a label function of the Kubernetes cluster platform may be used. A computing task submitted through the Kubernetes cluster platform is referred to as a Pod. Each Pod may be added with a user-defined annotation, to present different attributes. Therefore, a special annotation may be added to the offline computing task, and then whether the task is the offline computing task may be distinguished based on the annotation.

202: Perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information. In embodiments of the present application, 202 may include following operations: perform format conversion on the resource indication information in the first computing task based on a field format of the idle resource if it is determined, based on the configurable resource, that there is a target computing node satisfying the resource indication information in the at least one computing node, to obtain a second computing task.

In some embodiments, the target computing node may be a computing node that executes the first computing task, that is, the target computing node for allocating the first computing task. The target computing node herein is unique. The target computing node is an ultimate execution node for the first computing task that is determined by the virtual node.

In an actual application, when the target computing node is the ultimate execution node for the first computing task, the virtual node needs to add a related identifier of the target computing node to the second computing task, to indicate the allocating node to directly perform allocating based on the identifier of the target computing node carried in the second computing task when the allocating node allocates the second computing task.

In some embodiments, the target computing node may alternatively be a computing node satisfying execution of the first computing task. The target computing node herein may not be unique. Any computing node satisfying the execution of the first computing task may be the target computing node. The target computing node is a computing node that is determined by the virtual node in the at least one computing node and that may execute the first computing task, and is not the ultimate execution node for the first computing task.

In an implementation, because the configurable resource is determined by the idle resource of the at least one computing node, the virtual node necessarily learns of the idle resource of each computing node, the configurable resource may include a configurable sub-resource corresponding to the idle resource of each computing node, and whether the computing node satisfies the resource quantity information is determined based on the configurable sub-resource corresponding to the idle resource of the computing node. If the computing node satisfies the resource quantity information, the computing node may be determined as the target computing node. In this implementation, if configurable sub-resources corresponding to a plurality of computing nodes in the at least one computing node all satisfy the resource quantity information, there may be a plurality of target computing nodes.

In another implementation, whether the computing node satisfies the resource quantity information is determined based on the configurable sub-resource corresponding to the idle resource of the computing node, and the target computing node is determined in the computing node satisfying the resource quantity information. In this implementation, the target computing node is one of the computing nodes satisfying the resource quantity information.

For example, for the foregoing implementation, if there is only one computing node satisfying the resource quantity information in the at least one computing node, the computing node is the target computing node.

For another example, if there are a plurality of computing nodes satisfying the resource quantity information in the at least one computing node, one computing node may be randomly selected from the plurality of computing nodes satisfying the resource quantity information as the target computing node. Alternatively, a ratio of a quantity of idle resources to a quantity of used resources of the computing node may be determined, a plurality of computing nodes satisfying the resource quantity information are sorted based on the ratio, and a computing node having a largest ratio is selected as the target computing node. Alternatively, a computing node having a largest idle resource is selected from a plurality of computing nodes satisfying the resource quantity information as the target computing node. If there is more than one computing node having the largest idle resource, one of the computing nodes having the largest idle resource may be randomly selected as the target computing node.

In an actual application, if a form of the resource includes a central processing unit demand amount and a memory demand amount, code formats of the idle resource are gocrane.io/cpu and gocrane.io/mem, and field formats in the resource quantity information are cpu and mem. Therefore, to execute the second computing task by using the target computing node, cpu and mem need to be converted into gocrane.io/cpu and gocrane.io/mem.

Current resource quantity information may include two types of demand amounts: the central processing unit demand amount and the memory demand amount. This is not limited herein in this embodiment of this application. In addition, the code formats of the idle resource are not limited to gocrane.io/cpu or gocrane.io/mem, and the field formats in the resource quantity information are not limited to cpu or mem either.

203: Transmit the second computing task to the allocating node, the second computing task being configured to indicate the allocating node to execute the second computing task based on the target computing node.

In some embodiments, the second computing task may include the identifier of the target computing node, or may not include the identifier of the target computing node.

In an implementation, there may be two cases that the second computing task includes the identifier of the target computing node.

Case 1: The target computing node is the computing node that ultimately executes the second computing task, and the allocating node only needs to allocate the second computing task to the target computing node based on the identifier of the target computing node.

Case 2: The target computing node is the computing node satisfying the resource quantity information in the at least one computing node. If there is one target computing node, the target computing node is used as a computing node that ultimately executes the second computing task, and the allocating node allocates the second computing task to the target computing node based on the identifier of the target computing node. If there is more than one target computing node, the allocating node selects one of the target computing nodes as the computing node that ultimately executes the second computing task, and allocates the second computing task to a selected target computing node.

In another implementation, when the second computing task does not include the identifier of the target computing node, for example, a field corresponding to a node identifier in the second computing task is null, the following two cases may be included.

Case 1: The allocating node obtains the idle resource of the at least one computing node, and determines, based on the idle resource of each computing node, the computing node satisfying the resource quantity information in the at least one computing node. The allocating node determines the target computing node configured to execute the second computing task in the computing node satisfying the resource quantity information, and allocates the second computing task to the target computing node.

Case 2: The allocating node obtains the idle resource of the at least one computing node, and determines, based on the idle resource of each computing node, the target computing node satisfying the resource quantity information in the at least one computing node. The allocating node determines a computing node configured to execute the second computing task in the target computing node, and allocates the second computing task to the computing node.

Based on the foregoing two implementations, after the virtual node determines the computing node ultimately configured to execute the second computing task, an identifier of the computing node is annotated in the second computing task, to indicate the allocating node to allocate the second computing task based on the identifier of the computing node in the second computing task. The allocating may be determined by the allocating node. A determining manner of the allocating node may include that the second computing task includes identifiers of one or more computing nodes, and the allocating node selects the identifiers of the one or more computing nodes; or the second computing task does not include the identifier of the computing node, and the allocating node obtains the idle resource of the at least one computing node, and determines, based on the idle resource of the computing node, the computing node ultimately configured to execute the second computing task.

In some embodiments, when the target computing node is not unique, the second computing task is specifically configured to indicate the allocating node to determine, based on the idle resource of the target computing node, the computing node that executes the second computing task in the target computing node.

For example, when receiving the second computing task, if the second computing task includes node information of the plurality of target computing nodes, the allocating node determines the idle resource of the target computing node for each target computing node based on the node information of the target computing node, and determines, based on each target computing node, the computing node configured to execute the second computing task in the plurality of target computing nodes.

For another example, when the allocating node receives the second computing task, if the second computing task does not include node information of any target computing node, the allocating node obtains the idle resource of the at least one computing node, determines at least one target computing node based on the idle resource of each computing node, and further determines the computing node configured to execute the second computing task in the at least one target computing node.

In some embodiments, when the target computing node is not unique, the second computing task is specifically configured to indicate the allocating node to determine, based on the idle resource of the computing node, the computing node that executes the second computing task in the target computing node.

For example, when the allocating node receives the second computing task, if the second computing task does not include node information of any target computing node, the allocating node obtains the idle resource of at least one computing node, and directly determines, based on the idle resource of each computing node, the computing node configured to execute the second computing task.

The resource allocating method provided in this embodiment of this application may be applied to the virtual node. The configurable resource in the virtual node is determined based on the idle resources of the at least one computing node, so that the idle resources of the at least one computing node are aggregated, and a configurable resource of one virtual node can represent all idle computing power of the computing nodes. After it is determined that there is the configurable resource in the virtual node, the computing task, for example, the first computing task, can be received based on the configurable resource. After receiving the first computing task, because the first computing task includes the resource quantity information configured for representing the computing resource quantity pre-determined for executing the first computing task, the virtual node may determine, based on the configurable resource, whether there is the target computing node satisfying the resource quantity information in the at least one computing node. If there is the target computing node satisfying the resource quantity information, because a data format of the idle resource is different from a data format of the resource quantity information in the first computing task, considering that if the idle resource in the computing node needs to be used, format conversion needs to be performed on the data format of the resource quantity information. Specifically, format conversion is performed on the resource quantity information in the first computing task based on the field format of the idle resource, to obtain the second computing task. Therefore, in this application, when it is determined that there is the target computing node satisfying the resource quantity information in the at least one computing node, there is no need to use a control node to perform format conversion on the resource quantity information in the computing task, and the virtual node is used to implement format conversion, so that intrusive modification to native code of the control node is avoided. Then, a generated second computing task is transmitted to the allocating node, to indicate the allocating node to execute the second computing task based on the target computing node, so that the idle resource is reused on the premise of non-intrusive modification to the native code, and a utilization rate of a cluster resource is improved at low costs.

In an embodiment of this application, the resource allocating method is applied to the virtual node, and the virtual node may determine the computing node configured to execute the second computing task in the at least one computing node. Therefore, the performing format conversion on the resource quantity information in the first computing task based on a field format of the idle resource if it is determined, based on the configurable resource, that there is a target computing node satisfying the resource quantity information in the at least one computing node specifically includes: if the computing node satisfying the resource quantity information in the at least one computing node is determined based on the configurable resource, determining the target computing node in the computing node satisfying the resource quantity information; and performing format conversion on the resource quantity information in the first computing task based on the field format of the idle resource, and generating node information in the first computing task based on the node information of the target computing node, to obtain the second computing task, the second computing task being specifically configured to indicate the allocating node to execute the second computing task based on the node information that is of the target computing node and that is included in the second computing task.

The target computing node in this embodiment is the computing node that ultimately executes the second computing task.

In some embodiments, node information of the computing node is configured to indicate to identify the computing node, and the node information includes the identifier of the computing node. The node information included in the second computing task is the node information of the target computing node.

In an implementation, the second computing task includes the node information of the target computing node, and the target computing node is the computing node that executes the second computing task. If the second computing task includes node information of more than one target computing node and if the node information includes only the identifier of the target computing node, the idle resource of the target computing node is determined based on the identifier of each target computing node, and the computing node that ultimately executes the second computing task is determined based on the idle resource of each target computing node. If the node information includes the idle resource of the target computing node, the computing node that ultimately executes the second computing task may be determined based on the idle resource of each target computing node.

In this embodiment of this application, resources of the computing node may be divided into an idle resource and a used configuration resource. The resources of the computing node include, but are not limited to, a memory, a central processing unit, and the like. A total resource of the computing node includes, but is not limited to, at least one of an online resource, an offline resource, and a reserved resource.

A node agent of the computing node represents the idle resource of the computing node in a field format of gocrane.io/cpu. Data corresponding to gocrane.io/cpu in the computing node obtained by a node agent of the virtual node is the idle resource of the computing node.

For example, the node agent (Crane Agent) of the virtual node may obtain the idle resource of the computing node through a resource obtaining interface of the node agent of the computing node. For example, the resource is the CPU. It is assumed that there are an online task 1 to an online task 3. Actual use resource amounts currently corresponding to the online task 1 to the online task 3 are one core, six cores, and three cores respectively. Based on obtained actually used resources and a total resource of 100 cores of the computing node, where the reserved resource is 10 cores, it is determined that a current idle resource of the computing node is 80 cores, and data corresponding to gocrane.io/cpu in the computing node is displayed as 80 cores.

In this embodiment, the virtual node may determine, based on the configurable resource and the computing node satisfying the resource quantity information, the computing node (that is, the target computing node) that ultimately executes the second computing task, and then the virtual node generates the node information in the first computing task based on node information of the target computing node, to obtain the second computing task including the node information of the target computing node, so that the allocating node directly determines, based on the node information in the second computing task, the computing node that executes the second computing task, to reduce a computation amount of the allocating node.

In an embodiment of this application, the resource allocating method is applied to the virtual node. Whether the computing node is the target computing node may be determined based on a configurable resource corresponding to a configuration resource of the computing node. Therefore, that it is determined, based on the configurable resource, that there is the target computing node satisfying the resource quantity information in the at least one computing node includes: determining, for each computing node, the computing node as the target computing node if the configurable resource corresponding to the idle resource of the computing node is greater than or equal to the computing resource quantity pre-determined for executing the first computing task.

In an implementation, in the configurable resource of the virtual node, the configurable resource corresponding to the idle resource of the computing node is referred to as the configurable sub-resource, and when a quantity of the configurable sub-resource of the computing node is not less than a quantity of the computing resource quantity pre-determined for executing the first computing task, it is determined that the idle resource of the computing node satisfies the resource quantity information, and the computing node is further determined as the target computing node.

For this embodiment, in the at least one computing node, any computing node satisfying the resource quantity information is determined as the target computing node. Therefore, there may be more than one target computing node, that is, a computing node ultimately configured to execute the second computing task is one of the target computing nodes. In this case,
the second computing task is specifically configured to indicate the allocating node to determine, based on the idle resource of the target computing node, the computing node that executes the second computing task in the target computing node.

For example, when receiving the second computing task, if the second computing task includes node information of the plurality of target computing nodes, the allocating node determines the idle resource of the target computing node for each target computing node based on the node information of the target computing node, and determines, based on each target computing node, the computing node configured to execute the second computing task in the plurality of target computing nodes.

For another example, when the allocating node receives the second computing task, if the second computing task does not include node information of any target computing node, the allocating node obtains the idle resource of the at least one computing node, determines at least one target computing node based on the idle resource of each computing node, and further determines the computing node configured to execute the second computing task in the at least one target computing node.

In a cluster scenario in which a plurality of clusters are deployed online and offline in a mixed manner, when a plurality of offline computing tasks need to use an idle resource in an online cluster, the offline computing tasks may be sorted. The allocating node allocates the offline computing tasks to the virtual node in sequence based on the sorting, so that when determining that there is a target computing node satisfying the offline computing task in the online cluster, the virtual node performs format conversion on resource quantity information in the offline computing task.

When each offline computing task is configured, an object configuring the offline computing task may simultaneously configure, based on importance of the offline computing task, an execution parameter value corresponding to the offline computing task. The execution parameter value specifies an execution ranking of the offline computing task. An offline computing task with lower importance corresponds to a lower execution parameter value, and is executed later. Resources may be allocated to the offline computing tasks corresponding to the execution parameter values in descending order of execution parameter values. For example, the execution parameter value may be a priority value of the offline computing task.

In this embodiment, when a quantity of the configurable resources corresponding to the idle resource of the computing node is not less than the computing resource quantity pre-determined for executing the first computing task, the computing node may be determined as the target computing node, so that when the computing node executes the computing task, a problem that a computing quantity of idle resources does not satisfy a computing resource quantity pre-determined for executing the computing task is avoided, to ensure that the computing node can smoothly execute the computing task.

In an embodiment of this application, the resource allocating method is applied to the virtual node. To enable the allocating node to normally allocate the computing task to the virtual node, the virtual node needs to normally report the configurable resource of the virtual node to the allocating node. Because the configurable resource of the virtual node is derived from the idle resource of the computing node, the virtual node needs to convert a field format of the obtained idle resource of the computing node based on a field format of the configurable resource. Therefore, the method provided in this embodiment of this application further includes: obtaining the idle resource of the at least one computing node; and performing conversion processing on the field format of the idle resource based on the field format of the configurable resource, to obtain the configurable resource.

In an actual application, field formats of the resource quantity information of the computing task transmitted from a client are generally cpu and mem, and resources in these field formats may be referred to as native resources. If the computing task needs to use the native resource in the computing node, the resource quantity information in the computing task does not need to be modified. If the computing task needs to use the idle resource in the computing node, format conversion needs to be performed on the field format of the resource quantity information in the computing task based on the field format of the idle resource. To prevent the control node from converting the field format of the resource quantity information in the computing task, the virtual node needs to report the configurable resource of the virtual node based on a field format of the native resource when reporting the configurable resource. Therefore, the configurable resource is a native resource of the virtual node. In this way, the field format of the resource quantity information transmitted from the client does not need to be modified, and the configurable resource may also be matched with the resource quantity information, to facilitate subsequent determining of the target computing node.

For example, if the form of the resource includes the central processing unit demand amount and the memory demand amount, the virtual node obtains the idle resources in the field formats of gocrane.io/cpu and gocrane.io/mem of the computing node, and performs format conversion on the idle resources, to obtain the configurable resources in the field formats of cpu and mem.

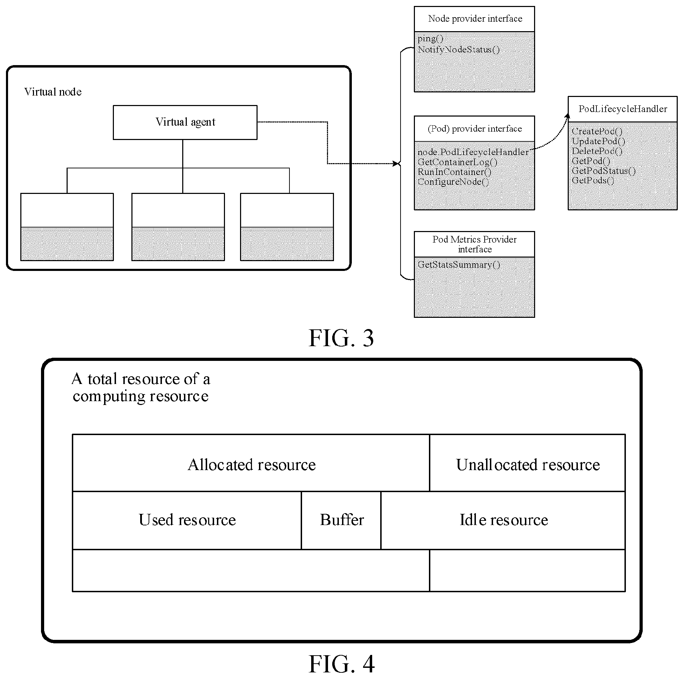

In an implementation, FIG. 3 is a schematic diagram of a structure of a virtual node. The virtual node includes a node provider interface, a (Pod) provider interface, and a Pod metrics provider interface.

Responsibilities of a node provider include: (1) A Kubernetes node is to be created. (2) A health check and state reporting of the virtual node are to be completed. (3) Because the node is virtual, no specific computing node corresponds to a schedulable resource in the state of the virtual node. Therefore, an idle resource of at least one computing node in a corresponding cluster need to be obtained for the virtual node. The node provider obtains the at least one computing node in the cluster, aggregates an undeclared resource in the computing node and an unused resource with a Pod declaration into gocrane.io/cpu, to obtain an idle resource of the computing node, completes conversion of the idle resources into configurable resources, and reports the schedulable resource (that is, a configurable resource) of the virtual node to an allocating node in a field format of cpu and mem. In this way, the allocating node can learn that the virtual node has an available cpu resource, and an available mem resource (that is, the configurable resource). The node provider may include commands such as interface ping () of a service state and NotifyNodeStatus().

A (Pod) provider actually performs life cycle management of the Pod, and a virtual node Virtual Kubelet plays a role of an agent. Responsibilities of the (Pod) provider include: When the Pod is allocated to the virtual node, a Pod list is read, and the Pod is allocated to a corresponding computing node through the allocating node; and when a allocated Pod is deleted, virtual Kubelet needs to delete the Pod allocated to the corresponding computing node through the allocating node, to complete resource release. The (Pod) provider may include commands such as GetContainerLog(), RunInContainer() describing whether a task is run in a container, and ConfigureNode(). Further, the (Pod) provider further includes node.PodLifecycleHandler. Pod life cycle management includes commands such as CreatePod(), UpdatePod(), DeletePod(), GetPod(), GetPodStatus(), and GetPods().

Main responsibilities of a Pod metrics provider include: The virtual node summarizes and reports states of all Pods to a management platform of the cluster. The Pod metrics provider may include a command such as GetStatsSummary().

In some embodiments, the computing node may determine a configuration coefficient of the idle resource based on an allocated and used resource and a total resource in the computing node, and further determine the idle resource of the computing node based on the configuration coefficient of the idle resource. In addition, after the idle resource is determined, the idle resource is transmitted to the virtual node, so that the virtual node obtains the idle resource of the computing node.

In an implementation, the configuration coefficient is configured to determine a parameter of the idle resource. A percentage of the used resource to the total resource may be used as a used proportion, a difference between 1 and the used proportion is used as a first candidate configuration coefficient of the idle resource, a preset configuration coefficient is used as a second candidate configuration coefficient, and a smaller one of the first candidate configuration coefficient and the second candidate configuration coefficient is selected as the configuration coefficient of the idle resource.

The preset configuration coefficient is a maximum proportion that may be allocated to the idle resource in the computing node. In an actual application, the preset configuration coefficient may be a configuration coefficient that is preset when the allocated and used resource in the computing node is 0. Generally, the preset configuration coefficient is not greater than 50%. For example, the preset configuration coefficient may be 40%.

For example, a CPU is used as an example. Assuming that the computing node is configured with a total resource of 100 cores, and the allocated and used resource is 30 cores, it may be learned that the used proportion is 30%, and further, it may be learned that the first candidate configuration coefficient is 70%. If the preset configuration coefficient is 50%, it may be learned that the configuration coefficient of the idle resource is the preset configuration coefficient.

Further, the total resource of the computing node may further include a buffering resource. Specifically, if the used resource is not 0, the configuration coefficient of the idle resource is determined based on the allocated and used resource, an allocated and unused resource, a buffer, and an allocatable total resource; and if the used resource is 0, it is determined that the configuration coefficient of the idle resource is the preset configuration coefficient.

FIG. 4 is a schematic diagram of distribution of a total resource of a computing node according to an embodiment of this application. The total resource of the computing node includes an allocated resource and an unallocated resource. The allocated resource further includes an allocated and used resource, an allocated and unused resource, and a buffer. The unused resource and the unallocated resource in the allocated resource may be used as an idle resource, and the buffer may buffer a currently running normal task. In other words, if there is a sudden computing task and resource avoidance is not performed, the buffer may be used for processing, to ensure that all computing tasks in the computing node can be successfully executed. A current super-configuration resource is determined based on the used resource, the buffer, and the allocatable total resource, that is, determined based on a super-configurable resource.

When a normal task is run in the computing node, that is, the allocated and used resource is not 0, the configuration coefficient of the idle resource is determined based on the allocated and used resource, the buffer, and the total resource. If there are many allocated and used resources, the configuration coefficient of the idle resource is small. If there are few allocated and used resources, the configuration coefficient of the idle resource is large, and a maximum configuration coefficient does not exceed the preset configuration coefficient. If the allocated and used resource is 0, the configuration coefficient of the idle resource is determined as a preset super-configuration coefficient. A problem that a large quantity of computing tasks are instantaneously allocated to a same computing node to trigger resource stress can be avoided through the preset super-configuration coefficient.

In this embodiment, conversion processing is performed on an obtained resource format of the idle resource in at least one computing stage based on a field format of a configurable resource, to obtain the configurable resource, to ensure that the virtual node can receive the computing task.

In an embodiment of this application, to ensure that an allocating node can normally allocate a computing task for the virtual node, the allocating node needs to obtain the configurable resource of the virtual node. Specifically, the configurable resource is reported to the allocating node. The configurable resource is used by the allocating node to allocate a first computing task to the virtual node.

In some embodiments, a quantity of virtual nodes may be determined based on a quantity of clusters in which the computing node is located and that need to be obtained. The virtual node may be in one-to-one correspondence with the cluster, that is, one virtual node correspondingly obtains the idle resource of the computing node in one cluster. The virtual node may be in one-to-many correspondence with the cluster, that is, one virtual node correspondingly obtains the idle resource of the computing node in a plurality of clusters.

For example, a plurality of virtual nodes may be deployed in one cluster, and each virtual node correspondingly obtains an idle resource of a computing node in one cluster. The idle resource may be an idle resource of a computing node in the cluster in which the virtual node is located, or may be an idle resource of a computing node in another cluster having an access credential.

For another example, the virtual node may obtain an idle resource of a computing node in the cluster in which the virtual node is located, and may further obtain an idle resource of a computing node in another cluster having an access credential.

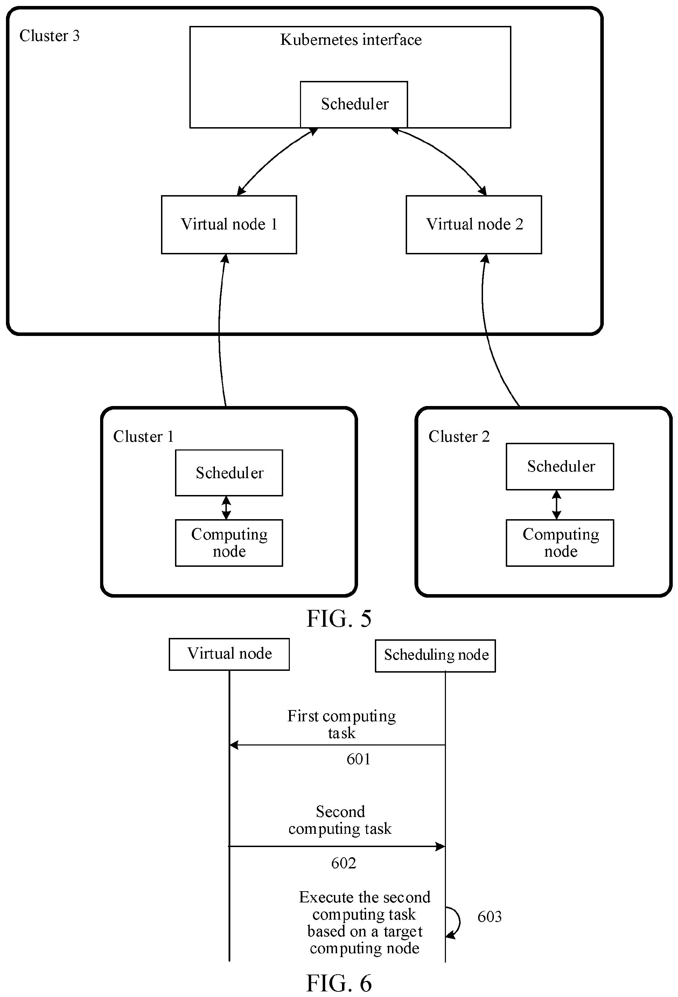

For example, with reference to FIG. 5, a cluster scenario in which a plurality of clusters are deployed online and offline in a mixed manner is used as an example. It is assumed that there are three clusters: a cluster 1, a cluster 2, and a cluster 3. The cluster 1 and the cluster 2 are online clusters, and the cluster 3 is an offline cluster. It is assumed that a virtual node is deployed in the cluster 3. If the virtual node is deployed based on a one-to-one correspondence between the virtual node and an online cluster that needs to be obtained, a virtual node 1 and a virtual node 2 are deployed in the cluster 3. The virtual node 1 has an access credential (that is, kubeconfig) of the cluster 1, and the virtual node 1 can obtain an idle resource of a computing node in the cluster 1 based on the access credential. The virtual node 2 has an access credential (that is, kubeconfig) of the cluster 2, and the virtual node 2 can obtain an idle resource of a computing node in the cluster 2 based on the access credential. In this way, the idle resource of the virtual node may be determined in the cluster 3, to facilitate subsequent task deployment based on the idle resource.

Based on the foregoing descriptions, after obtaining the idle resource of the computing node in the cluster 1, the virtual node 1 aggregates and performs format conversion on the idle resource of the computing node in the cluster 1, to obtain a configurable resource of the virtual node 1. The virtual node 1 reports the configurable resource to an allocator (that is, the allocating node) in the cluster 3. The allocator in the cluster 3 allocates the first computing task (where the first computing task is the offline computing task) to the virtual node 1 based on the configurable resource of the virtual node 1. Then, the virtual node 1 determines, based on the configurable resource, whether there is a computing node satisfying the resource quantity information of the first computing task in the cluster 1. If there is the computing node satisfying the resource quantity information, the target computing node is determined in the computing node satisfying the resource quantity information of the first computing task. In addition, format conversion is performed on the resource quantity information based on the field format of the idle resource, and the node information of the first computing task is generated based on the node information of the target computing node, to obtain the second computing task.

With reference to the foregoing descriptions, after the second computing task is obtained, the virtual node 1 transmits the second computing task in the following two manners.

In a first manner, the virtual node 1 directly transmits the second computing task to a allocator of the cluster 1, and the allocator of the cluster 1 allocates, based on the node information in the second computing task, the second computing task to the computing node corresponding to the node information.

In a second manner, the virtual node 1 transmits the second computing task to the allocator of the cluster 1 through the allocator of the cluster 3, and the allocator of the cluster 1 allocates, based on the node information in the second computing task, the second computing task to the computing node corresponding to the node information.

The online cluster and the offline cluster are both independent clusters and do not communicate with each other. Entrances of the clusters are completely isolated, and permissions of the clusters are also completely isolated. In this embodiment of this application, the virtual node may be used as a bridge connecting the online cluster and the offline cluster, so that the offline cluster may use the virtual node to obtain the idle resource of the online cluster and deploy the task. In other words, the offline cluster may use the idle resource of the online cluster to execute the task without obtaining a permission of the online cluster. In this way, in this embodiment of this application, a utilization rate of the idle resource of the online cluster can be improved at low costs without changing an original organization architecture and a permission isolation requirement.

In this embodiment, the virtual node reports the configurable resource of the virtual node to the allocating node, so that the allocating node allocates the computing task to the virtual node.

Refer to FIG. 6. An embodiment of this application further provides a resource allocating method, applied to an allocating node. The method includes the following operations.

601: Transmit a first computing task to a virtual node.

The first computing task includes resource quantity information, the resource quantity information indicates a computing resource quantity pre-determined for executing the first computing task, the first computing task is configured to indicate the virtual node to perform format conversion on the on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information.

602: Receive the second computing task from the virtual node.

603: Execute the second computing task based on the target computing node.

Content of the operations in FIG. 6 is only briefly described, and details are subject to the descriptions of the foregoing operations 201 to 203.

A resource allocating method provided in this application may be applied to a control node. After it is determined that there is a configurable resource in a virtual node, the control node transmits a computing task, for example, a first computing task, to the virtual node. Because the first computing task includes resource quantity information configured for representing a computing resource quantity pre-determined for executing the first computing task, the first computing task may be used to indicate the virtual node to determine, based on the configurable resource, whether there is a target computing node satisfying the resource quantity information in at least one computing node. If there is the target computing node satisfying the resource quantity information, because a data format of an idle resource is different from a data format of the resource quantity information in the first computing task, considering that if the idle resource in the computing node needs to be used, format conversion needs to be performed on the data format of the resource quantity information. The virtual node performs format conversion on the resource quantity information in the first computing task based on a field format of the idle resource, to obtain a second computing task. Therefore, in this application, when it is determined that there is the target computing node satisfying the resource quantity information in the at least one computing node, there is no need to use the control node to perform format conversion on the resource quantity information in the computing task, and the virtual node is used to implement format conversion, so that intrusive modification to native code of the control node is avoided. Then, an allocating node receives the second computing task from the virtual node, and executes the second computing task based on the target computing node, so that the idle resource is reused on the premise of non-intrusive modification to the native code, and a utilization rate of a cluster resource is improved at low costs.

In an embodiment of this application, the second computing task includes node information of the target computing node, and the executing the second computing task based on the target computing node includes: determining the target computing node based on the node information; and allocating the second computing task to the target computing node.

In an embodiment of this application, the target computing node is a computing node that ultimately executes the second computing task or a computing node satisfying the resource quantity information. The node information of the target computing node includes an identifier of the target computing node, and the allocating the second computing task to the target computing node includes: allocating the second computing task to the target computing node based on the identifier of the target computing node when the target computing node is the computing node that ultimately executes the second computing task; allocating the second computing task to the target computing node based on the identifier of the target computing node when the target computing node is the computing node satisfying the resource quantity information and there is one target computing node; or selecting, when the target computing node is the computing node satisfying the resource quantity information and there are a plurality of target computing nodes, the target computing node from the plurality of target computing nodes as the computing node that ultimately executes the second computing task, and allocating the second computing task to a selected target computing node.

In an embodiment of this application, the executing the second computing task based on the target computing node includes: determining, based on the idle resource of the target computing node, a computing node configured to execute the second computing task in the target computing node; and allocating the second computing task to the computing node configured to execute the second computing task in the target computing node.

In an embodiment of this application, the determining, based on the idle resource of the target computing node, a computing node configured to execute the second computing task in the target computing node includes: determining, when the second computing task includes node information of a plurality of target computing nodes, the idle resource of the target computing node based on the node information of the target computing node, and determining, based on each target computing node, the computing node configured to execute the second computing task in the plurality of target computing nodes; when the second computing task does not include node information of any target computing node, obtaining the idle resource of the at least one computing node, and determining, based on the idle resource of each computing node, the target computing node satisfying the resource quantity information; determining the computing node configured to execute the second computing task in the target computing node; or when the second computing task does not include node information of any target computing node, obtaining the idle resource of the at least one computing node, determining, based on the idle resource of each computing node, the computing node satisfying the resource quantity information, and determining, based on the computing node satisfying the resource quantity information, the target computing node configured to execute the second computing task.

In an embodiment of this application, the method further includes: receiving the configurable resource reported by the virtual node; and the transmitting the first computing task to the virtual node further includes: allocating the first computing task to the virtual node if the configurable resource satisfies the resource quantity information of the first computing task.

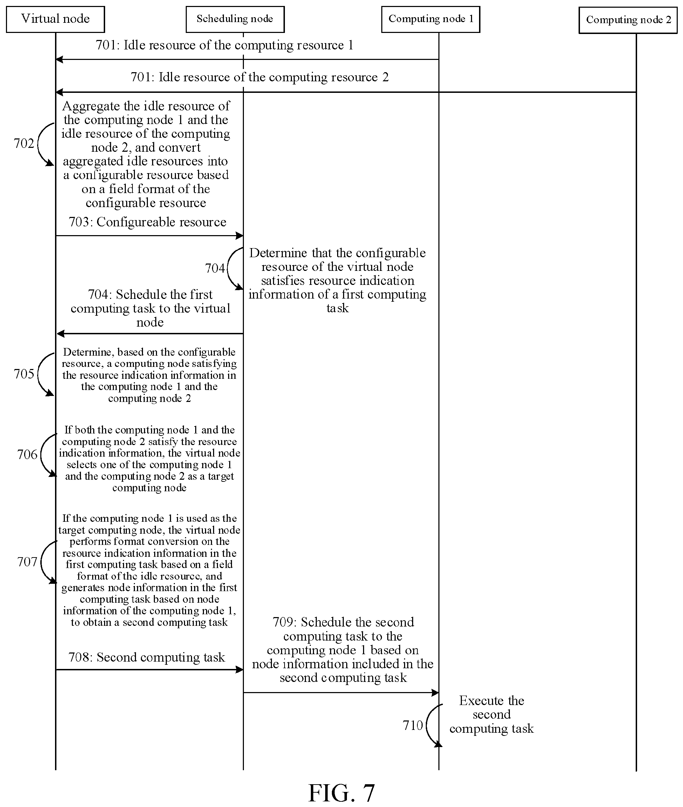

In an embodiment of this application, if there are a plurality of first computing tasks, the transmitting the first computing task to the virtual node includes: sorting the first computing tasks based on a preset sorting manner, and allocating the plurality of first computing tasks to the virtual node in sequence based on a sorting order. To better understand the resource allocating method provided in this embodiment of this application, with reference to FIG. 7, an exemplary description is provided by using a form of interaction between the virtual node, the control node, and the computing node. For example, the computing nodes are a computing node 1 and a computing node 2.

701: A virtual node receives an idle resource of the computing node 1 and an idle resource of the computing node 2.

702: The virtual node aggregates the idle resource of the computing node 1 and the idle resource of the computing node 2, and converts aggregated idle resources into a configurable resource based on a field format of the configurable resource.

703: The virtual node transmits the configurable resource to an allocating node.

704: The allocating node allocates a first computing task to the virtual node if determining that the configurable resource of the virtual node satisfies resource quantity information of the first computing task.

The first computing task includes the resource quantity information, and the resource quantity information is configured for representing a computing resource quantity pre-determined for executing the first computing task.

705: The virtual node determines, based on the configurable resource, a computing node satisfying the resource quantity information in the computing node 1 and the computing node 2.

706: If both the computing node 1 and the computing node 2 satisfy the resource quantity information, the virtual node selects one of the computing node 1 and the computing node 2 as a target computing node.

707: If the computing node 1 is used as the target computing node, the virtual node performs format conversion on the resource quantity information in the first computing task based on a field format of the idle resource, and generates node information in the first computing task based on node information of the computing node 1, to obtain a second computing task.

708: The virtual node transmits the second computing task to the allocating node.

709: The allocating node allocates the second computing task to the computing node 1 based on node information included in the second computing task.

710: The computing node 1 executes the second computing task.

For operations 706 to 709, in another implementation, if both the computing node 1 and the computing node 2 satisfy the resource quantity information, the virtual node may use both the computing node 1 and the computing node 2 as target computing nodes. The virtual node performs format conversion on the resource quantity information in the first computing task based on the field format of the idle resource, and generates the node information in the first computing task based on node information of the computing node 1 and the computing node 2, to obtain the second computing task. The allocating node selects, based on the node information that is of the computing node 1 and the computing node 2 and that is included in the second computing task, one of the computing node 1 and the computing node 2 as the computing node that executes the second computing task.

For operations 706 to 709, in still another implementation, at least one of the computing node 1 and the computing node 2 satisfies the resource quantity information. The virtual node performs format conversion on the resource quantity information in the first computing task based on the field format of the idle resource, to obtain the second computing task. The allocating node obtains idle resources of the computing node 1 and the computing node 2, and selects, based on the idle resources of the computing node 1 and the computing node 2 and the resource quantity information in the second computing task, one of the computing node 1 and the computing node 2 as the computing node that executes the second computing task.

Although operations of the method in this application are described in a specific order in the accompanying drawings, this does not require or imply that the operations need to be performed in the specific order, or that all the operations shown need to be performed, to achieve an expected result.

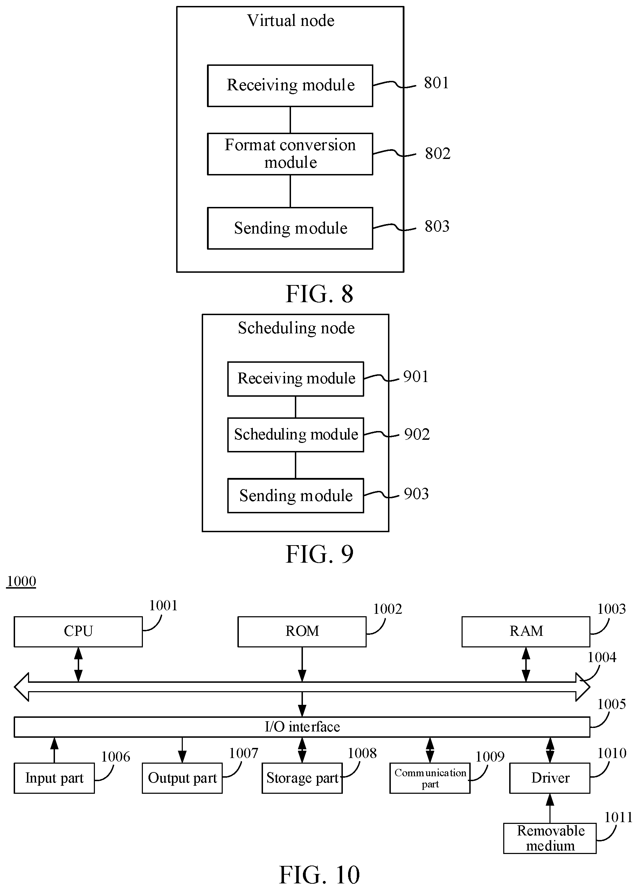

FIG. 8 is a schematic diagram of a block of a virtual node according to an embodiment of this application.

As shown in FIG. 8, a configurable resource of a virtual node is determined by an idle resource of at least one computing node, and the virtual node includes a receiving module 801, a format conversion module 802, and a transmitting module 803.

The receiving module 801 is configured to receive a first computing task from an allocating node, the first computing task including resource quantity information, and the resource quantity information being configured for representing a computing resource quantity pre-determined for executing the first computing task.

The format conversion module 802 is configured to perform format conversion on the resource quantity information in the first computing task based on a field format of the idle resource if it is determined, based on the configurable resource, that there is a target computing node satisfying the resource quantity information in the at least one computing node, to obtain a second computing task.

The transmitting module 803 is configured to transmit the second computing task to the allocating node, the second computing task being configured to indicate the allocating node to execute the second computing task based on the target computing node.

In an embodiment of this application, the format conversion module 802 is specifically configured to:
if the computing node satisfying the resource quantity information in the at least one computing node is determined based on the configurable resource,
determine the target computing node in the computing node satisfying the resource quantity information; and
perform format conversion on the resource quantity information in the first computing task based on the field format of the idle resource, and generate node information in the first computing task based on node information of the target computing node, to obtain the second computing task, the second computing task being specifically configured to indicate the allocating node to execute the second computing task based on the node information that is of the target computing node and that is included in the second computing task.

In an embodiment of this application, the format conversion module 802 is specifically configured to: determine, for each computing node, the computing node as the target computing node if a quantity of the configurable resources corresponding to the idle resource of the computing node is greater than or equal to the computing resource quantity pre-determined for executing the first computing task.

In an embodiment of this application, the second computing task is specifically configured to indicate the allocating node to determine, based on the idle resource of the target computing node, the computing node that executes the second computing task in the target computing node.

In an embodiment of this application, the receiving module 801 is further configured to obtain the idle resource of the at least one computing node.

The format conversion module 802 is configured to perform conversion processing on the field format of the idle resource based on the field format of the configurable resource, to obtain the configurable resource.

In an embodiment of this application, the transmitting module 803 is further configured to report the configurable resource to the allocating node, and the configurable resource is used by the allocating node to allocate the first computing task to the virtual node.

According to the virtual node provided in this application, the configurable resource in the virtual node is determined through the idle resources of the at least one computing node, so that the idle resources of the at least one computing node are aggregated, and the configurable resource of one virtual node can represent all idle computing power of the computing nodes. After it is determined that there is the configurable resource in the virtual node, the computing task, for example, the first computing task, can be received based on the configurable resource. After receiving the first computing task, because the first computing task includes the resource quantity information configured for representing the computing resource quantity pre-determined for executing the first computing task, the virtual node may determine, based on the configurable resource, whether there is the target computing node satisfying the resource quantity information in the at least one computing node. If there is the target computing node satisfying the resource quantity information, because a data format of the idle resource is different from a data format of the resource quantity information in the first computing task, considering that if the idle resource in the computing node needs to be used, format conversion needs to be performed on the data format of the resource quantity information. Specifically, format conversion is performed on the resource quantity information in the first computing task based on the field format of the idle resource, to obtain the second computing task. Therefore, in this application, when it is determined that there is the target computing node satisfying the resource quantity information in the at least one computing node, there is no need to use the control node to perform format conversion on the resource quantity information in the computing task, and the virtual node is used to implement format conversion, so that intrusive modification to native code of the control node is avoided. Then, a generated second computing task is transmitted to the allocating node, to indicate the allocating node to execute the second computing task based on the target computing node, so that the idle resource is reused on the premise of non-intrusive modification to the native code, and a utilization rate of a cluster resource is improved at low costs.

The units recorded in the virtual node correspond to the operations in the method described with reference to FIG. 2. Therefore, operations and features described above for the method are also applicable to a resource allocating apparatus and units included in the resource allocating apparatus. Details are not described herein again. The virtual node may be implemented in a server in advance, or may be loaded to the server in a manner such as downloading. A corresponding unit in the virtual node may cooperate with a unit in a computer device to implement the solutions of the embodiments of this application.

FIG. 9 is a schematic diagram of a block of an allocating node according to another embodiment of this application.

As shown in FIG. 9, the allocating node includes a receiving module 901, an allocating module 902, and a transmitting module 903.

The transmitting module 903 is configured to transmit a first computing task to a virtual node, the first computing task including resource quantity information, the resource quantity information being configured for representing a computing resource quantity pre-determined for executing the first computing task, the first computing task being configured to indicate the virtual node to perform format conversion on the resource quantity information in the first computing task based on a resource format of an idle resource when the virtual node determines, based on a configurable resource, that there is a target computing node satisfying the resource quantity information in at least one computing node, to obtain a second computing task, and the configurable resource of the virtual node being determined based on an idle resource of the at least one computing node.

The receiving module 901 is configured to receive the second computing task from the virtual node.

The allocating module 902 is configured to execute the second computing task based on the target computing node.

In an embodiment of this application, the second computing task includes node information of the target computing node, and the allocating module 902 is specifically configured to determine the target computing node based on the node information, and allocate the second computing task to the target computing node.

In an embodiment of this application, the allocating module 902 is specifically configured to:
determine, based on the idle resource of the target computing node, the computing node configured to execute the second computing task in the target computing node; and
allocate the second computing task to the computing node configured to execute the second computing task in the target computing node.

In an embodiment of this application, the receiving module 901 is further configured to receive the configurable resource reported by the virtual node.

The transmitting module 903 is specifically configured to allocate the first computing task to the virtual node if the configurable resource satisfies the resource quantity information of the first computing task.

An embodiment of this application provides a control node. After it is determined that there is the configurable resource in the virtual node, the control node transmits the computing task, for example, the first computing task, to the virtual node. Because the first computing task includes the resource quantity information configured for representing the computing resource quantity pre-determined for executing the first computing task, the first computing task may be used to indicate the virtual node to determine, based on the configurable resource, whether there is the target computing node satisfying the resource quantity information in the at least one computing node. If there is the target computing node satisfying the resource quantity information, because a data format of the idle resource is different from a data format of the resource quantity information in the first computing task, considering that if the idle resource in the computing node needs to be used, format conversion needs to be performed on the data format of the resource quantity information. The virtual node performs format conversion on the resource quantity information in the first computing task based on a field format of the idle resource, to obtain the second computing task. Therefore, in this application, when it is determined that there is the target computing node satisfying the resource quantity information in the at least one computing node, there is no need to use the control node to perform format conversion on the resource quantity information in the computing task, and the virtual node is used to implement format conversion, so that intrusive modification to native code of the control node is avoided. Then, the allocating node receives the second computing task from the virtual node, and executes the second computing task based on the target computing node, so that the idle resource is reused on the premise of non-intrusive modification to the native code, and a utilization rate of a cluster resource is improved at low costs.

The units recorded in the allocating node correspond to the operations in the method described with reference to FIG. 6. Therefore, operations and features described above for the method are also applicable to the allocating node and units included in the allocating node. Details are not described herein again. The allocating node may be implemented in a server in advance, or may be loaded to the server in a manner such as downloading. A corresponding unit in the allocating node may cooperate with a unit in a computer device to implement the solutions of the embodiments of this application.

Although several modules or units are mentioned in the foregoing detailed descriptions, this division is not mandatory. Actually, based on the embodiments of this application, features and functions of two or more modules or units described above may be specified in one module or unit. On the contrary, the features and the functions of one module or unit described above may be further divided that is specified in one module or unit.

For details undisclosed in the virtual node and the allocating node in the embodiments of this application, refer to details disclosed in the foregoing embodiments of this application. Details are not described herein again.

Referring to FIG. 10, FIG. 10 is a schematic diagram of a structure of a computer device for implementing the embodiments of this application. As shown in FIG. 10, a computer system 1000 includes a central processing unit (CPU) 1001, and the central processing unit may perform various appropriate actions and processes based on a program stored in a read-only memory (ROM) 1002 or a program loaded to a random access memory (RAM) 1003 from a storage part 1008. Various programs and data needed for operation instructions of the system are stored in the RAM 1003. The CPU 1001, the ROM 1002, and the RAM 1003 are connected to each other through a bus 1004. An input/output (I/O) interface 1005 is connected to the bus 1004.

The following components are connected to the I/O interface 1005, including an input part 1006 of a keyboard, a mouse, and the like; including an input part 1007 of a cathode ray tube (CRT), a liquid crystal display (LCD), a speaker, and the like; including a storage part 1008 of hardware; and including a communication part 1009 of a network interface card such as a local area network (LAN) card, a modem, and the like. The communication part 1009 performs communication processing via a network such as the internet. A driver 1010 is also connected to the I/O interface 1005 as needed. A removable media 1011, such as a magnetic disk, an optical disk, a magneto-optical disk, a semiconductor memory, and the like are installed on the drive 1010 as needed, so that it may be read that a computer program is installed to the storage part 1008 as needed.

Specifically, based on the embodiments of this application, the process described foregoing with reference to the flowchart FIG. 2 may be implemented as a computer software program. For example, an embodiment of this application includes a computer program product, and the computer program product is carried on computer program of a computer-readable medium. The computer program includes a program code configured to perform the method shown in the flowchart. In this embodiment, the computer program includes a program code configured to execute the method shown in the flowchart. In this embodiment, the computer program may be uploaded and installed from the network by using the communication part 1009, and/or be installed from the removable media 1011. When the computer program is executed by the central processing unit (CPU) 1001, the foregoing functions limited in a system of this application are executed.

The computer-readable medium shown in this application may be a computer-readable signal medium or a computer-readable storage medium, or any combination of the computer-readable signal medium and the computer-readable storage medium. The computer-readable storage medium may be, for example, but is not limited to, an electrical, magnetic, optical, electromagnetic, infrared, or a semiconductor system, apparatus or component, or any combination thereof. More specific examples of the computer-readable storage medium may include but are not limited to an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of thereof. In this application, the computer-readable storage medium may be any tangible medium that includes or stores a program. The program may be used by an instruction execution system, apparatus, or device, or may be used by a combination of the instruction execution system, apparatus, or device. In this application, the computer-readable signal medium may include a data signal propagated in a baseband or as a part of a carrier, and computer-readable program code is carried in the data signal. The propagated data signal may use various forms, including but not limited to an electromagnetic signal, an optical signal, or any appropriate combination of thereof. The computer-readable signal medium may further be any computer-readable medium other than the computer-readable storage medium. The computer-readable medium may transmit, propagate, or transmit a program used by the instruction execution system, apparatus, or device or used in combination with the instruction execution system, apparatus, or device. The program code included in the computer-readable medium may be transmitted by using any suitable medium, including but not limited to a wireless medium, an electric line, an optical cable, an RF, or the like, or any suitable combination thereof.

Flowcharts and block diagrams in the drawings illustrate architectures, functions, and operation instructions that may be implemented using the system, the method, and the computer program product according to various embodiments of this application. In this way, each block in the flowchart or the block diagram may represent a module, a program segment, or a part of code. The module, the program segment, or the part of the code include one or more executable instructions for implementing specific logical functions. In some alternative implementations, the functions noted in the block may occur not in sequence noted in the drawings. For example, two blocks shown one after another may actually be executed substantially in parallel, or the two blocks may sometimes be executed in a reverse order. This depends on the functions involved. Each box in the block diagram and/or the flowchart and a combination of boxes in the block diagram and/or the flowchart may be implemented may using a dedicated hardware-based system configured to execute a specified function or operation instructions, or may be implemented by using a combination of dedicated hardware and computer instructions.

A related unit or module described in the embodiments of this application may be implemented in a software manner, or may be implemented in a hardware manner. The described unit or module may also be disposed in a processor, for example, may be described as a processor including a violated person detection unit, a multi-modality detection unit, and a recognition unit. Names of the unit or module do not constitute a limitation on the unit or module under some situations.

According to another aspect, this application further provides a computer-readable storage medium. The computer-readable storage medium may be included in the computer device described in embodiments, and may also exist alone without being assembled into the computer device. The computer-readable storage medium stores one or more programs. The programs, when executed by one or more processors, perform the resource allocating method described in this application. For example, operations of the resource allocating method shown in FIG. 2 may be performed or operations of the resource allocating method shown in FIG. 6 may be performed.

An embodiment of this application provides a computer program product. The computer program product includes instructions, and when the instructions are run, the method described in the embodiments of this application is performed. For example, operations of the resource allocating method shown in FIG. 2 may be performed or operations of the resource allocating method shown in FIG. 6 may be performed.

The foregoing descriptions are merely preferred embodiments of this application and descriptions of applied technical principles. A person skilled in the art needs to understand that the scope of the disclosure involved in this application is not limited to the technical solutions formed by a particular combination of the foregoing technical features, and needs to also cover another technical solution formed by any combination of the foregoing technical features or equivalent features thereof without departing from the idea of the present disclosure. For example, the foregoing features are replaced with (but not limited to) technical features with similar functions disclosed in this application to form the technical solutions.

## Claims

1. A resource allocating method, applied to a virtual node of which a configurable resource is determined based on an idle resource of at least one computing node, and the method comprising:
receiving a first computing task from an allocating node, the first computing task comprising resource quantity information indicating a computing resource quantity pre-determined for executing the first computing task;
performing format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information; and
transmitting the second computing task to the allocating node, the second computing task being configured to indicate the allocating node to execute the second computing task based on the target computing node.

2. The resource allocating method according to claim 1, wherein the performing format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information comprises:
if the target computing node in the at least one computing node is determined based on the configurable resource,
determining the target computing node in the computing node satisfying the resource quantity information; and
performing format conversion on the resource quantity information in the first computing task based on the field format of the idle resource, and generating node information in the first computing task based on node information of the target computing node, to obtain the second computing task, the second computing task being specifically configured to indicate the allocating node to execute the second computing task based on the node information that is of the target computing node and that is comprised in the second computing task.

3. The resource allocating method according to claim 1 or 2, wherein the determining, based on the configurable resource, a target computing node from the at least one computing node, of which a quantity of the configurable resource determined based on the idle resource is equal to or greater than the computing resource quantity indicated by the resource quantity information comprises:
determining, for each computing node, the computing node as the target computing node if a quantity of the configurable resources corresponding to the idle resource of the computing node is greater than or equal to the computing resource quantity pre-determined for executing the first computing task.

4. The resource allocating method according to claim 1 or 3, wherein the second computing task is specifically configured to indicate the allocating node to determine, based on an idle resource of the target computing node, a computing node that executes the second computing task in the target computing node.

5. The resource allocating method according to claim 1, wherein the method further comprises:
obtaining the idle resource of the at least one computing node; and
performing conversion processing on the field format of the idle resource based on a field format of the configurable resource, to obtain the configurable resource.

6. The resource allocating method according to claim 5, wherein the obtaining the idle resource of the at least one computing node comprises:
determining a configuration coefficient of the idle resource based on an allocated and used resource and a total resource of the computing node; and
determining the idle resource of the computing node based on the configuration coefficient of the idle resource.

7. The resource allocating method according to claim 6, wherein the total resource comprises an allocated resource and an unallocated resource, the allocated resource comprises an allocated and used resource, an allocated and unused resource, and a buffer, and the idle resource comprises the allocated and unused resource and the unallocated resource.

8. The resource allocating method according to claim 1, wherein the method further comprises:
reporting the configurable resource to the allocating node, the configurable resource being used by the allocating node to allocate the first computing task to the virtual node.

9. A resource allocating method, applied to an allocating node, and the method comprising:
transmitting a first computing task to a virtual node, the first computing task comprising resource quantity information indicating a computing resource quantity pre-determined for executing the first computing task, the first computing task being configured to indicate the virtual node to perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information;
receiving the second computing task from the virtual node; and
executing the second computing task based on the target computing node.

10. The resource allocating method according to claim 9, wherein the second computing task comprises node information of the target computing node, and the executing the second computing task based on the target computing node comprises:
determining the target computing node based on the node information; and
allocating the second computing task to the target computing node.

11. The resource allocating method according to claim 10, wherein the target computing node is a computing node that ultimately executes the second computing task or a computing node satisfying the resource quantity information, the node information of the target computing node comprises an identifier of the target computing node, and the allocating the second computing task to the target computing node comprises:
allocating, when the target computing node is the computing node that ultimately executes the second computing task, the second computing task to the target computing node based on the identifier of the target computing node;
allocating, when the target computing node is the computing node satisfying the resource quantity information and there is one target computing node, the second computing task to the target computing node based on the identifier of the target computing node; or
selecting, when the target computing node is the computing node satisfying the resource quantity information and there are a plurality of target computing nodes, a target computing node from the plurality of target computing nodes as the computing node that ultimately executes the second computing task, and allocating the second computing task to the selected target computing node.

12. The resource allocating method according to claim 9, wherein the executing the second computing task based on the target computing node comprises:
determining, based on the idle resource of the target computing node, a computing node configured to execute the second computing task in the target computing node; and
allocating the second computing task to the computing node configured to execute the second computing task in the target computing node.

13. The resource allocating method according to claim 12, wherein the determining, based on the idle resource of the target computing node, a computing node configured to execute the second computing task in the target computing node comprises:
determining the idle resource of the target computing node based on the node information of the target computing node, and determining, based on each target computing node, the computing node configured to execute the second computing task in the plurality of target computing nodes, when the second computing task comprises node information of the plurality of target computing nodes;
obtaining the idle resource of the at least one computing node, and determining, based on an idle resource of each computing node, the target computing node satisfying the resource quantity information, when the second computing task does not comprise node information of any target computing node; and
determining the computing node configured to execute the second computing task in the target computing node; or
obtaining the idle resource of the at least one computing node, and determining, based on the idle resource of each computing node, the computing node satisfying the resource quantity information, when the second computing task does not comprise node information of any target computing node; and
determining, based on the computing node satisfying the resource quantity information, the target computing node configured to execute the second computing task.

14. The resource allocating method according to any one of claims 9 to 13, wherein the method further comprises:
receiving the configurable resource reported by the virtual node; and
the transmitting a first computing task to a virtual node comprises:
allocating the first computing task to the virtual node if the configurable resource satisfies the resource quantity information of the first computing task.

15. The resource allocating method according to claim 9, wherein when there are a plurality of first computing tasks, the transmitting a first computing task to a virtual node comprises:
sorting the first computing tasks based on a preset sorting manner, and allocating the plurality of first computing tasks to the virtual node in sequence based on a sorting order.

16. A virtual node, a configurable resource of the virtual node being determined by an idle resource of at least one computing node, and the virtual node comprising:
a receiving module, configured to receive a first computing task from an allocating node, the first computing task comprising resource quantity information indicating a computing resource quantity pre-determined for executing the first computing task;
a format conversion module, configured to perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information; and
a transmitting module, configured to transmit the second computing task to the allocating node, the second computing task being configured to indicate the allocating node to execute the second computing task based on the target computing node.

17. An allocating node, comprising:
a transmitting module, configured to transmit a first computing task to a virtual node, the first computing task comprising resource quantity information indicating a computing resource quantity pre-determined for executing the first computing task, the first computing task being configured to indicate the virtual node to perform format conversion on the resource quantity information in the first computing task based on a field format of the idle resource to obtain a second computing task, in a case of determining, based on the configurable resource, a target computing node from the at least one computing node, of which a quantity of the configurable resource determined based on the idle resource is equal to or greater than the computing resource quantity indicated by the resource quantity information;
a receiving module, configured to receive the second computing task from the virtual node; and
an allocating module, configured to execute the second computing task based on the target computing node.

18. A computer device, comprising a memory, a processor, and a computer program stored in the memory and executable in the processor, the processor implementing the method according to any one of claims 1 to 8 or the method according to claims 9 to 15 when executing the program.

19. A computer-readable storage medium, having a computer program stored therein, the method according to any one of claims 1 to 8 or the method according to claims 9 to 15 being implemented when the program is executed by a processor.

20. A computer program product, the computer program product comprising instructions, and the instructions, when executed, causing the method according to any one of claims 1 to 8 or the method according to claims 9 to 15 to be performed.
